(19) Europäisches Patentamt
European Patent Office
Office européen des brevets

(11) EP 2 248 246 B1

# (12) EUROPÄISCHE PATENTSCHRIFT

(45) Veröffentlichungstag und Bekanntmachung des Hinweises auf die Patenterteilung:
**21.09.2011 Patentblatt 2011/38**

(21) Anmeldenummer: **08872707.8**

(22) Anmeldetag: **19.11.2008**

(51) Int Cl.:
***H02K 23/30*** (2006.01) ***H02K 23/38*** (2006.01)

(86) Internationale Anmeldenummer:
**PCT/EP2008/065857**

(87) Internationale Veröffentlichungsnummer:
**WO 2009/103368 (27.08.2009 Gazette 2009/35)**

## (54) VERFAHREN ZUR HERSTELLUNG DER LÄUFERWICKLUNG EINER ELEKTRISCHEN MASCHINE SOWIE ELEKTRISCHE MASCHINE MIT EINER NACH DIESEM VERFAHREN HERGESTELLTEN LÄUFERWICKLUNG

METHOD FOR PRODUCING THE ROTOR WINDING OF AN ELECTRICAL MACHINE, AND AN ELECTRICAL MACHINE WITH A ROTOR WINDING WHICH IS PRODUCED IN ACCORDANCE WITH THIS METHOD

PROCÉDÉ DE FABRICATION DU BOBINAGE D'UN ROTOR D'UNE MACHINE ÉLECTRIQUE AINSI QUE MACHINE ÉLECTRIQUE ÉQUIPÉE D'UN BOBINAGE DE ROTOR FABRIQUÉ SELON CE PROCÉDÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.02.2008 DE 102008000377**

(43) Veröffentlichungstag der Anmeldung:
**10.11.2010 Patentblatt 2010/45**

(73) Patentinhaber: **Robert Bosch GmbH**
**70442 Stuttgart (DE)**

(72) Erfinder: **ROOS, Gerald**
**77855 Sasbachried (DE)**

(56) Entgegenhaltungen:
**DE-A1-102006 036 835** **JP-A- 2007 282 500**
**US-A1- 2007 152 532**

EP 2 248 246 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung der Läuferwicklung einer elektrischen Maschine nach der Gattung des Anspruchs 1 sowie eine elektrische Maschine mit einer nach diesem Verfahren hergestellten Läuferwicklung nach der Gattung des Anspruchs 9.

Stand der Technik

Aus der Druckschrift DE 10 2004 062 813 A1 ist es bekannt, die Anzahl der am Umfang eines Kommutatorläufers abwechselnden Nuten und Polzähnen so zu wählen, dass sie von der Anzahl der Erregerpole im Stator abweicht. Die Anzahl der so genannten Einzelzahnspulen ist gleich der Anzahl der Kommutatorlamelle jedoch doppelt so groß wie die Anzahl der Polzähne und Nuten. Dabei sind die auf den Polzähnen gleichmäßig verteilt gewickelten Spulen mit einer vorgegebenen Lamellenschrittweite an den Anschlussfahnen der Lamellen kontaktiert. Von der ersten Spule ausgehend werden alle weiteren, nacheinander durchgewickelten Spulen jeweils auf denjenigen Polzahn mit dem geringsten, auf eine Polteilung bezogenen Winkelfehler gewickelt.

Bei den in dieser Druckschrift dargestellten und beschriebenen Ausführungsbeispielen ist problematisch, dass der Wickeldraht zum Kontaktieren der Spulen mit den Kommutatorlamellen in oftmals wechselnder Folge einerseits direkt aus einer Nut zur Anschlussfahne einer Lamelle geführt wird und andererseits von der Nut über einen größeren Umfangsbereich zur Anschlussfahne geführt werden muss. Mit fortschreitendem Durchwickeln rutscht dann dieser über einen Umfangsbereich geführte Wickeldraht auf den direkt zu den Nuten geführten Wickeldrähten in Richtung der Lamellen ab und erschwert dadurch weitere Kontaktierungen an den Anschlussfahnen der Lamellen.

Bei den Ausführungsbeispielen gemäß Figur 8 und 10 dieser Druckschrift werden die Anschlussdrähte an den Anschlussfahnen der Lamellen teilweise so angehakt, dass zwischen dem zur Lamelle zugeführten und dem von der Lamelle abgeführten Draht nur ein spitzer Winkel entsteht, mit dem Nachteil, dass die so gebildete Drahtöse an der Anschlussfahne elastisch auffedert. Da beim Kontaktieren des Wickeldrahtes mit der Anschlussfahne durch das so genannte Hot-Staking der Isolierlack des Wickeldrahtes im Bereich der Öse abgeschmolzen wird, besteht hier die Gefahr von Kurzschlüssen zu den Wickeldrahtösen benachbarter Anschlussfahnen.

Zur Reduzierung der Drehmomentwelligkeit und zur Erhöhung der Drehmomentdichte der Gleichstrommaschinen schlagen die Dokumente JP2007282500 und DE102006036835 Verhältnisse zwischen Anzahl der magnetischen Pole, der Spulen und der Kommutatorlamellen vor, mit denen sich die Wickelköpfe und das Wicklungsvolumen reduzieren lassen.

Mit der vorliegenden Lösung wird angestrebt, zur Vermeidung von Kontaktierungsproblemen die Drahtführung an den Anschlussfahnen der Lamellen zu verbessern sowie ein kritisches Auffedern der Drahtösen zu verhindern.

Offenbarung der Erfindung

Das Verfahren zur Herstellung der Läuferwicklung einer elektrischen Maschine mit den kennzeichnenden Merkmalen des Anspruchs 1 hat den Vorteil, dass ein Auffedern der Ösen des Wickeldrahtes an den Anschlussfahnen der Lamellen stark verringert wird, indem zwischen dem einer Anschlussfahne zugeführten und abgeführten Wickeldraht mindestens ein Polzahn angeordnet und damit eine ausreichende Umschlingung der Anschlussfahne gewährleistet ist. Ein weiterer Vorteil besteht darin, dass bei diesen Spulen außerdem der Wickeldraht nicht bei einem fortschreitenden Durchwickeln der Spulen zwischen Spule und Anschlussfahne zum Kommutator hin abrutschen kann, da zwischen zu- und abgeführten Wickeldraht höchstens zwei Polzähne liegen und somit der Wickeldraht nicht über einen größeren Umfang verläuft.

Diese Vorteile ergeben sich folglich auch bei einer elektrischen Maschine nach Anspruch 9, deren Läuferwicklung nach dem Verfahren des Anspruchs 1 hergestellt ist.

Durch die in den Unteransprüchen aufgeführten Maßnahmen erzielt man vorteilhafte Ausgestaltungen und Weiterbildungen der im Anspruch 1 angegebenen Merkmale.

So ergibt sich eine verbesserte und gleichmäßige Wickeldrahtführung an der Kommutatorseite des Läufers dadurch, dass zumindest bei einem Teil der nacheinander durchgewickelten Spulen der Wickeldraht von der Spule zur Lamelle beziehungsweise von der Lamelle zur Spule jeweils zwischen zwei weiteren, der Lamelle näher liegenden Polzähnen hindurchgeführt wird. Dabei ist darauf zu achten, dass zwischen der jeweiligen Lamelle und der Durchführung des Wickeldrahtes höchstens zwei Polzähne liegen. Alternativ dazu kann es bei Ankerausführungen, bei denen zwischen dem Kommutator und den Polzähnen des Ankers genügend Platz vorhanden ist, von Vorteil sein, wenn bei einem vorzugsweise ersten Teil der nacheinander durchgewickelten Spulen der Wickeldraht von der Spule zur Lamelle sowie von der Lamelle zur nächsten Spule jeweils über einen auf der Läuferwelle angeordneten Stützring hinweggeführt wird, wobei die Spulen zur Lamelle jeweils um mindestens 90° versetzt sind.

Um die Drehmomentwelligkeit zu verringern und die Kommutierung zu verbessern, wird die Induktivität in den Polzähnen in zweckmäßiger Weise dadurch reduziert, dass zumindest die mit einem Winkelfehler zur Polteilung versehenen Spulen auf zwei einander gegenüberliegende Polzähne verteilt gewickelt werden. Dadurch werden außerdem in vorteilhafter Weise die durch die Bestromung der Spulen verursachten radialen Kraftkomponenten an den einander gegenüberliegenden Polzähnen gleichgroß und somit in ihrer Summe eliminiert. Zweckmäßigerweise werden dabei alle Spulen geteilt und jeweils auf zwei einander gegenüberliegende Polzähne gewickelt. Dabei lässt sich die Läuferwicklung besonders einfach herstellen, wenn die geteilten Spulen jeweils als Spulenhälften in Reihenschaltung nacheinander durchgewickelt werden. Alternativ dazu ist vorgesehen, dass im Bedarfsfall die geteilten Spulen jeweils als Spulenhälften zu ihren gemeinsamen Anfangs- und Endlamellen parallel geschaltet werden. Für einen symmetrischen Spulenaufbau ist es vorteilhaft, wenn die Spulen mit Winkelfehler und die Spulen ohne Winkelfehler in gleichmäßiger Folge nacheinander durchgewickelt werden. In Weiterbildung der Erfindung kann es zur Erzielung einer günstigen Drehmomentwelligkeit oder einer über den Läuferumfang gleichmäßigen Gewichtsverteilung vorteilhaft sein, wenn zumindest bei einem Teil der auf gegenüberliegenden Polzähnen aufgeteilten Spulen jeweils die Spulenhälften mit unterschiedlichen Windungszahlen gewickelt werden.

Kurze Beschreibung der Zeichnungen

Die Erfindung wird im Folgenden beispielhaft anhand der Figuren näher erläutert. Es zeigen:

Figur 1 eine schematische Darstellung der erfindungsgemäßen elektrischen Maschine in der Vorderansicht,
Figur 2 die Abwicklung der Maschine aus Figur 1 in schematischer Darstellung mit einer ersten Einzelzahnspule;
Figur 3a bis 3f zeigen schematisch verschiedene Anschlussformen des Wickeldrahtes an mehrere benachbarte Kommutatorlamellen.
Figur 4 zeigt in einem ersten Ausführungsbeispiel die nach dem erstellte Wickeltabelle und
Figur 5a bis 5e zeigt in schematischer Darstellung die Herstellung der Läuferwicklung nach der Wickeltabelle gemäß Figur 3 in fünf Abschnitten.
Figur 6 zeigt die Wickeltabelle für ein zweites Ausführungsbeispiel mit 10 geteilten Spulen,
Figur 7 zeigt in schematischer Darstellung die Herstellung von 4 Spulen der Läuferwicklung nach einem ersten Abschnitt der Wickeltabelle gemäß Figur 6.
Figur 8 zeigt als weiteres Ausführungsbeispiel den ersten Abschnitt einer Wickeltabelle mit einem gegenüber der Tabelle gemäß Figur 6 geänderten Wickelsinn und
Figur 9 zeigt in schematischer Darstellung die Herstellung von 4 Spulen der Läuferwicklung nach dem Abschnitt der Wickeltabelle gemäß Figur 8.
Figur 10 zeigt die Wickeltabelle für ein viertes Ausführungsbeispiel mit zwanzig geteilten Spulen und
Figur 11 zeigt in schematischer Darstellung die Herstellung der Läuferwicklung nach einem ersten Abschnitt der Wickeltabelle gemäß Figur 10.
Figur 12 zeigt die Wickeltabelle für ein fünftes Ausführungsbeispiel von zwanzig geteilten Spulen,
Figur 13a zeigt in schematischer Darstellung die Herstellung der ersten vier Teilspulen nach dem ersten Abschnitt der Wickeltabelle gemäß Figur 12 und
Figur 13b zeigt in schematischer Darstellung die Herstellung der dazu parallel geschalteten vier Teilspulen nach einem zweiten Abschnitt der Wickeltabelle gemäß Figur 12.
Figur 14 zeigt den ersten Abschnitt einer Wickeltabelle für ein sechstes Ausführungsbeispiel mit einer geänderten Anschlussfiguration zur Wickeltabelle gemäß Figur 12 und
Figur 15 zeigt in schematischer Darstellung die Herstellung des ersten Abschnittes der Läuferwicklung nach der Wickeltabelle gemäß Figur 14.

Beschreibung der Ausführungsbeispiele

In Figur 1 ist für ein erstes Ausführungsbeispiel ein permanent magnetisch erregter sechspoliger Gleichstrommotor als elektrische Maschine in der Vorderansicht schematisch dargestellt und mit 10 bezeichnet. Derartige Maschinen werden bevorzugt für Stellantriebe, Kühlgebläse und dergleichen in Kraftfahrzeuge eingesetzt und müssen bei hohen Belastungen möglichst über die ganze Lebensdauer des Fahrzeugs zuverlässig arbeiten. Dementsprechend muss ihr Aufbau möglichst robust sein. Die elektrische Maschine 10 hat einen sechspoligen Stator 11, der über einen Arbeitsluftspalt 12 mit einem Kommutatorläufer 13, nachfolgend Läufer genannt, zusammenwirkt. Der Läufer 13 besteht aus einem Blechpaket 14, dass auf einer beidseitig gelagerten Läuferwelle 15 befestigt ist. Am Umfang des Blechpaktes 14 sind zehn gleichmäßig verteilte Polzähne Z angeordnet, zwischen denen jeweils Nuten N zur Aufnahme von insgesamt zwanzig Spulen S einer Läuferwicklung 18 ausgebildet sind. Die Spulen S sind dabei als Einzelzahnspulen paarweise um je einen Polzahn Z durch Wickelautomaten hergestellt. Die Spulen S werden dabei in besonderer Weise mit einem an der vorderen Stirnseite des Blechpaktes 14 auf der Läuferwelle 15 aufgesetzten Kommutator 16 verschaltet. Der Kommutator 16 hat zwanzig über den Umfang gleichmäßig verteilt angeordnete Lamellen L, die mit zwei ortsfesten Kohlebürsten B1 und B2 zusammenwirken. Die Kohlebürsten sind um 180° gegeneinander versetzt und werden zum Betrieb der elektrischen Maschine mit Gleichstrom versorgt. Die zehn Polzähne Z des Läufers 13 wirken dabei mit drei Erregerpolpaaren des Stators 11 zusammen. Um eine möglichst geringe Drehmomentenwelligkeit der elektrischen Maschine zu bekommen, weicht die Anzahl der Polzähne von der Anzahl der Erregerpole P ab.

Figur 2 zeigt in schematischer Darstellung eine Abwicklung des Gleichstrommotors 10 aus Figur 1, mit der das Wickelverfahren zur Herstellung und Anordnung der Spulen S auf den Polzähnen Z des Läufers 13 im Folgenden näher erläutert wird. Erkennbar ist dort der sechspolige Stator 11, die zehn Polzähne Z1 bis Z10, die ersten zwei Einzelzahnspulen S1 und S2 sowie die zwanzig Lamellen L1 bis L20 des Kommutators 16. Die Anordnung der ersten Spule S1 ist frei wählbar und wird hier dem dritten Polzahn Z3 zugeordnet. Ferner wird der erste Polzahn Z1 hier der Mitte eines Nordpols N des Stators 11 zugeordnet. Auch diese Zuordnung ist frei wählbar. Außerdem wird die ebenfalls frei wählbare Zuordnung der Kommutatorlamellen L zu den Polzähnen Z hier so gewählt, dass der erste Polzahn Z1 genau in Höhe des Lamellenschlitzes zwischen den Lamellen L1 und L20 des Kommutators 16 liegt. Diese Position soll nunmehr gemäß Figur 2 am Umfang die Winkellage von $\varphi = 0°$ haben. Daraus ergibt sich, dass der benachbarte Polzahn Z2 auf der Position von 36° liegt und dass der nächste Lamellenschlitz sich auf der Position von 18° befindet. Des Weiteren wird festgelegt, dass sämtliche Spulen S mit ihrem Anfang jeweils an einer Anfangslamelle La und mit ihrem Ende an einer Endlamelle Le kontaktiert werden. Gemäß Figur 2 bilden die Lamelle L1 für die erste Spule S1 die frei wählbare Anfangslamelle La1. Durch die hier gewählte Anordnung der Position der Lamelle L1 ergibt sich folglich zwischen der Anfangslamelle La1 der Spule S1 und dem für diese Spule vorgesehen Polzahn Z3 ein Winkelversatz $\varphi_0$ von 63°. In Figur 2 befindet sich die optimale Lage der Spule S1 mitten unter einem Pol des Stators 11. Diese Position hat einen Winkelfehler Wf = 0°.

Um die Einzelzahnspulen S nach Art einer Wellenwicklung durchgehend auf die Polzähne Z wickeln zu können, wird für alle Spulen S eine Lamelleschrittweite Y festgelegt, die sicherstellt, dass das Ende einer jeden Spule mit einer freien Lamelle L kontaktiert wird. In Figur 2 ist eine Lamelleschrittweite Y von sieben Lamellen vorgesehen, das heißt: Y = 7.

Wie bereits in der vorne erwähnten Druckschrift DE 10 2004 062 813 A1 ausführlich dargestellt und erörtert wird, lassen sich zunächst fortlaufend für alle Spulen die Anfangslamelle La und die Endlamelle Le ermitteln. Danach werden für jede weitere, der Spule S1 nachfolgenden Spule des Läufers 13 in einem ersten Durchgang für jeden Polzahn Z der Winkelfehler Wf im Hinblick auf die Polteilung des Stators 11 mit folgender Formel ermittelt:

$$(1) \qquad Wf(j) = \cos [2\pi * p/z * (j\text{-}Lai/M)]$$

Aus den auf diese Weise für jeden Polzahn Z ermittelten Winkelfehler der zweiten Spule S2 wird nun in einem weiteren Schritt derjenige Polzahn ermittelt, auf dem die Spule S2 den kleinsten Winkelfehler Wf hat. Auf diese Weise wird für die Spule S2 auf den Polzahn Z5 der geringste Winkelfehler Wf = 18° beziehungsweise der größte Winkelfehler-Cosinuswert max = 0,951 ermittelt. Der gleiche Winkelfehler tritt auch auf den Polzähne Z8, Z10 und Z3 auf, was für einen optimalen Spulenanschluss ausgenutzt werden kann.

Auf diese Weise werden für alle Spulen S die Anfangs- und Endlamellen La und Le sowie der jeweils optimale Polzahn Z ermittelt. In der vorerwähnten Druckschrift wird mit diesen Werten nunmehr die für einen Wickelautomaten benötigte Wickeltabelle erstellt, wobei der Wickeldraht jeweils direkt von der Anfangslamelle La zur Spule S beziehungsweise von der Spule S zur Endlamelle Le geführt wird. Bei höheren Spulenzahlen ergeben sich dabei jedoch Probleme bei der Drahtführung zwischen Kommutator 16 und den Spulen S, so dass es erforderlich ist, die Spulenanschlüssen an den Lamellen 16 zu ordnen.

In den Figuren 3a bis 3f sind verschiedene Möglichkeiten der Kontaktierung schematisch dargestellt. Dabei wird der Wickeldraht 17 jeweils um eine Anschlussfahne 16a der Lamellen L herumgeführt. Dabei werden im Folgenden solche Lösungen als Anhaken bezeichnet, bei denen der Wickeldraht jeweils direkt von der Anschlussfahne 16a einer Lamelle L zu einer Nut N geführt wird. Dies ist für die Ausführungen nach Figur 3a, 3b, 3c und 3e der Fall. Als Umhaken werden im Folgenden solche Anschlüsse bezeichnet, bei denen der Wickeldraht 17 von einer Anschlussfahne 16a des Kommutators 16 um die Läuferwelle herum auf einem zwischen Kommutator 16 und Bleckpaket 14 angeordneten Stützring 19 aus Isolierstoff aufliegend zur Nut N geführt wird. Dies ist bei den Ausführungen nach Figur 3d und 3f der Fall. Da beim so genannten Hot-Staking zum Kontaktieren der Lamellen L die Anschlussfahne 16 mit einer Stempelelektrode zu einem Haken zur Lamelle hin gebogen und durch elektrischen Strom mit dem Wickeldraht 17 verschmolzen wird, schmilzt der Isolierlack im Bereich der um die Anschlussfahnen 16a herum gelegten Öse 17c am Wickeldraht 17 ab. Dabei ist es wichtig, dass die Ösen 17c möglichst eng um die Anschlussfahnen 16a herumgeführt werden und nach ihrem Anhaken beziehungsweise Umhaken an den Anschlussfahnen 16a möglichst wenig auffedern, damit bei eng aneinander liegenden Anschlussfahnen 16 benachbarte Lamellen L nicht über die Ösen 17c kurz geschlossen werden. Dies ist bei den Ausführungen nach Figur 3a, 3b, 3c und 3d der Fall, bei denen der Wickeldraht von einer Seite zur Anschlussfahne zugeführt und zur anderen Seite wieder weggeführt wird. Beim Anhaken gemäß Figur 3a liegen bei jedem Lamellenanschluss zwischen dem zugeführten und dem abgeführten Wickeldraht 17 zwei Polzähne Z. Bei der Ausführung nach Figur 3b liegen zwischen zugeführtem und abgeführtem Wickeldraht 17 an den benachbarten Lamellenanschlüssen abwechselnd ein Polzahn beziehungsweise zwei Polzähne Z und bei der Ausführung nach Figur 3c liegt zwischen dem zugeführten und abgeführten Wickeldraht 17 jeweils ein Polzahn Z. Eine enge, wenig auffedernde Öse 17c ergibt sich auch bei einem Umhaken der Anschlussfahnen 16a gemäß Figur 3d, da auch hier der Wickeldraht 17 von der einen Seite zur Anschlussfahne 16a zugeführt und zur anderen Seite weggeführt wird. Zu vermeiden sind dagegen die problematischen Ausführungen gemäß Figur 3e und 3f. Beim Anhaken gemäß Figur 3e bildet sich zwischen dem zur Anschlussfahne 16a zugeführten und ihr abgeführten Wickeldraht 17 jeweils nur ein kleiner spitzer Winkel, da die Zuführung und Abführung nahezu senkrecht von der Lamelle L weg zu ein- und derselben Nut geht. In diesem Fall wird mit zunehmender Drahtstärke der Wickeldraht 17 im Bereich der Öse 17c auffedern mit der Gefahr von Lamellenschlüssen. Die Gefahr einer verstärkt auffedernden Öse 17c ergibt sich auch bei einer Ausführung gemäß Figur 3f, bei der beim Umhaken die Zu- und Abführung des Wickeldrahtes 17 zwischen den Anschlussfahnen 16a und den Spulen S zu ein- und derselben Seite über den Stützkörper 19 hinweg nahezu parallel zu jeweiligen Nut geführt wird.

Um den Raum zwischen Kommutator 16 und Bleckpaket 14 des Läufers 13 für die Anschlussverbindungen der Spulen S zu den Lamellen L insbesondere bei einer großen Spulenzahl optimal nutzen zu können, kann es sinnvoll sein, den ersten durchgewickelten Teil der Spulen S durch ein Umhaken mit den Lamellen L gemäß Figur 3d zu kontaktieren, so dass anschließend beim Durchwickeln des letzteren Teiles der Spulen diese durch Anhaken mit den Lamellen L kontaktiert werden können. Dabei wird zum Anhaken eine der Lösungen gemäß Figur 3a, 3b oder 3c verwendet. Für die nachfolgenden Ausführungsbeispiele werden folglich die erforderlichen Wickeltabellen derart erstellt, dass zumindest bei einem zuletzt gewickelten Teil der Spulen S der mit einer Anschlussfahne 16a einer Lamelle L kontaktierte Wickeldraht 17 von der einen Seite der Lamelle L zugeführt und von der anderen Seite weggeführt wird und dass zwischen der Nut N, aus der der Wickeldraht 17 der Lamelle L zugeführt wird und der Nut, zu der er von der Lamelle L weggeführt wird, mindestens ein Polzahn Z liegt, jedoch höchstens zwei Polzähne Z liegen. Um dies zu Erreichen, muss zumindest bei einem Teil der nacheinander durchgewickelten Spulen S der Wickeldraht 17 von der Spule S zur Lamelle L beziehungsweise von der Lamelle L zur Spule S jeweils zwischen zwei weiteren, der Lamelle L näher liegenden Polzähnen Z hindurchgeführt werden, wobei zwischen der Lamelle L und der Durchführung des Wickeldrahtes höchstens zwei Polzähne Z liegen dürfen.

In dem ersten Ausführungsbeispiel nach Figur 1 und 2 wird nunmehr nach den zuvor beschriebenen Vorgaben eine in Figur 4 dargestellte Wickeltabelle für einen sechspoligen Gleichstrommotor mit folgenden Angaben erstellt:

| | |
|---|---|
| Polpaarzahl | p= 3 |
| Polzähnezahl | Z = 10 |
| Lamellenzahl | L = 20 |
| Spulenzahl | S = 20 |
| Lamellenschrittweite | Y = 7 |
| Windungszahl | Wz = 14 beziehungsweise 15 |
| Winkelversatz | (Polzahn 1 zu Lamelle 1) $\varphi = 0°$ |

Ein nicht dargestellter Wickelautomat arbeitet nun die erstellte Wickeltabelle gemäß Figur 4 zeilenweise ab, wobei die Spulen S1 bis S20 nacheinander durchgewickelt und jeweils mit den ihnen zugeordneten Lamellen L des Kommutators 16 kontaktiert werden. In den Figuren 5a bis 5e wird die Herstellung der Spulen nach der Wickeltabelle aus Figur 4 gemäß der Tabellenabschnitte a bis f in einer Läuferabwicklung schematisch dargestellt und im Folgenden beschrieben:

Der Wickeldraht 17 wird gemäß Abschnitt a zunächst mit seinem Anfang 17a an der Lamelle L1 kontaktiert. Er wird von dort zur Nut 10 geführt, durch sie hindurch zur Rückseite des Läufers und von dort zum Polzahn Z3. Die Spule S1 wird nun - mittels Pfeil angedeutet - mit 14 Windungen links herum auf dem Polzahn Z3 gewickelt. Das Spulenende wird nun über die Läuferrückseite zur Nut N5 geführt. Von dort wird der Wickeldraht 17 nun durch die Nut 5 hindurch zum Kommutator 16 geführt und dort mit der Lamelle L8 kontaktiert. Von dort wird nun auf dem Polzahn Z5 die Spule S2 mit 15 Windungen rechts herum gewickelt und das Spulenende wird so dann durch die Nut N7 zur Läuferrückseite gerührt. Von dort gelangt der Wickeldraht 17 nun durch die Nut N8 zur Konmmtatorseite und wird hier mit der Lamelle 15 kontaktiert. Von dort wird nun der Wickeldraht 17 durch die Nut N7 zur Läuferrückseite und sodann zum Polzahn Z10 geführt. Dort wird die Spule S3 mit 14 Windungen links herum gewickelt und das Spulenende wird sodann über die Läuferrückseite durch die Nut N2 zur Kommutatorseite geführt und hier mit der Lamelle L2 kontaktiert. Von dort wird nun auf dem Polzahn Z2 die Spule S4 mit 15 Windungen rechts herum gewickelt und das Spulenende wird sodann durch die Nut N4 zur Läuferrückseite geführt. Von dort gelangt der Wickeldraht 17 nun durch die Nut N5 zur Kommutatorseite und wird hier mit der Lamelle L9 kontaktiert. Von der Lamelle L9 wird der Spulendraht durch den angedeuteten Pfeil auf die Läuferabwicklung in Figur 5b übergeleitet. Der Wickeldraht wird dabei mit seinen gestrichelt dargestellten Abschnitten jeweils von der linken Seite der Läuferabwicklung zur rechten Seite übergeleitet.

Dort wird von der Lamelle L9 der Wickeldraht 17 durch die Nut N4 zur Läuferrückseite und sodann zum Polzahn Z7 geführt. Dort wird die Spule S5 mit 14 Windungen links herum gewickelt und das Spulenende wird sodann über die Läuferrückseite durch die Nut N9 zur Kommutatorseite geführt und hier mit der Lamelle L16 kontaktiert. Von dort wird nun auf den Polzahn Z9 die Spule S6 mit 15 Windungen rechts herum gewickelt und das Spulenende wird sodann durch die Nut N1 zur Läuferrückseite geführt. Von dort gelangt der Wickeldraht 17 nun durch die Nut N2 zur Kommutatorseite und wird hier mit der Lamelle L3 kontaktiert. Von dort wird nun der Wickeldraht durch die Nut N1 zur Läuferrückseite und sodann zum Polzahn Z4 geführt. Dort wird die Spule S7 mit 14 Windungen links herum gewickelt und das Spulenende wird sodann über die Läuferrückseite durch die Nut N6 zur Kommutatorseite geführt und hier mit der Lamelle L10 kontaktiert. Von dort wird nun auf dem Polzahn Z6 die Spule S8 mit 15 Windungen rechts herum gewickelt und das Spulenende wird sodann durch die Nut N8 zur Läuferrückseite geführt. Von dort gelangt der Wickeldraht 17 nun durch die Nut N9 zur Kommutatorseite und wird hier mit der Lamelle L17 kontaktiert. Von der Lamelle L17 wird der Spulendraht durch den angedeuteten Pfeil auf die Läuferabwicklung in Figur 5c übergeleitet.

In gleicher Weise werden nun die Spulen S9 bis S12 gemäß Abschnitt c der Wickeltabelle nach Figur 4 nacheinander durchgewickelt, wie dies in der Läuferabwicklung gemäß Figur 5c dargestellt ist.

In gleicher Weise werden auch die Spulen S13 bis S16 gemäß der Läuferabwicklung gemäß Figur 5d nach dem Abschnitt d der Wickeltabelle nach Figur 4 sowie die Spulen S 17 bis S20 gemäß der Läuferabwicklung nach Figur 5e nach dem Abschnitt e der Wickeltabelle aus Figur 4 hergestellt. Nachdem nun alle 20 Spulen S nacheinander durchgewickelt wurden, wird das Ende 17b des Wickeldrahtes schließlich wieder an der Lamelle L1 kontaktiert.

Bei diesem Ausführungsbeispiel sind sämtliche Spulen S an den Lamellen L angehakt. Gemäß dem Anhakschema nach Figur 3c ist die Zuführung und Abführung des Wickeldrahtes jeweils zu beiden Seite der Lamelle so gelegt, dass in allen Fällen zwischen Zu- und Abführung jeweils ein Polzahn Z liegt. Um dies auch bei solchen Spulen S zu erreichen, die von ihren Lamellenanschlüssen weiter entfernt liegen, werden dort die Spulenenden durch den jeweiligen Lamellenanschluss näher liegende Nuten N hindurchgeführt. Diese Durchführungen des Wickeldrahtes haben dabei zur Vermeidung von magnetischen Unsymmetrien einen Abstand von höchstens zwei Polzähnen.

In einem zweiten Ausführungsbeispiel der Erfindung werden nun zur Verringerung der Drehmomentenwelligkeit und zur Vermeidung von einseitig am Läuferumfang auftretenden radialen magnetischen Kräften alle mit einem Winkelfehler $w = f > 0°$ zur Polteilung versehenen Spulen S auf zwei einander gegenüberliegende Polzähne Z verteilt angeordnet. Dies ist beim ersten Ausführungsbeispiel jede zweite Spule. Nach den Berechnungen der Winkelfehler für sämtliche Spulen ist aus der vorgenannten Druckschrift bekannt, dass für jede Spule an mehreren einander gegenüberliegenden Positionen gleichgroße Winkelfehler beziehungsweise keine Winkelfehler auftreten. Aufgrund dieser bekannten Berechnungen wird in Abwandlung des ersten Ausführungsbeispieles eine Wickeltabelle gemäß Figur 6 für eine elektrische Maschine 10 nach Figur 1 mit folgenden Vorgaben erstellt:

| | |
|---|---|
| Polpaarzahl | $p = 3$ |
| Polzähnezahl | $Z = 10$ |
| Lamellenzahl | $L = 20$ |
| Spulenzahl | $S = 20$ |
| Lamellenschrittweite | $Y = 7$ |
| Windungszahl | $Wz = 10$ beziehungsweise 7 |
| Versatzwinkel | $\varphi = 0°$ |

Ein Wickelautomat arbeitet die Wickeltabelle nach Figur 6 zeilenweise ab, wobei die Spulen S1 bis S20 nacheinander durchgewickelt und jeweils mit den ihnen zugeordneten Lamellen L des Kommutators 16 kontaktiert werden. In Figur 7 wird die Herstellung der Spulen S1 bis S4 nach dem Abschnitt a der Wickeltabelle aus Figur 6 in einer Läuferabwicklung schematisch dargestellt und im Folgenden beschrieben. Die Spulen S2 und S4 werden dabei in zwei Hälften S2a und S2b sowie S4a und S4b aufgeteilt.

Der Wickeldraht 17 wird gemäß Abschnitt a) zunächst mit seinem Anfang 17a an der Lamelle L1 kontaktiert. Von dort wird nun der Wickeldraht 17 durch die Nut N10 zur Läuferrückseite und sodann zum Polzahn Z3 geführt. Dort wird die Spule S1 mit 10 Windungen links herum gewickelt und das Spulenende wird sodann durch die Nut N5 zur Kommutatorseite geführt und hier mit der Lamelle L8 kontaktiert. Von dort wird nun auf dem Polzahn Z5 die erste Spulenhälfte S2a der zweiten Spule mit 7 Windungen rechts herum gewickelt und der Wickeldraht wird sodann zum Polzahn 8 geführt. Dort wird nun die zweite Spulenhälfte S2b mit 8 Windungen rechts herum gewickelt und das Spulenende wird so dann mit der Lamelle L15 kontaktiert. Von dort wird nun der Wickeldraht durch die Nut N7 zur Läuferrückseite und sodann zum Polzahn Z10 geführt. Dort wird die Spule S3 mit 10 Windungen links herum gewickelt und das Spulenende wird sodann durch die Nut N2 zur Kommutatorseite geführt und hier mit der Lamelle L2 kontaktiert. Von dort wird nun auf dem Polzahn Z2 die erste Hälfte S4a der vierten Spule mit 7 Windungen rechts herum gewickelt und der Wickeldraht wird sodann zum Polzahn Z5 geführt. Dort wird die zweite Spulenhälfte S4b mit 7 Windungen rechts herum gewickelt und das Spulenende sodann mit der Lamelle L9 kontaktiert. In gleicher Weise werden nun die nachfolgenden Zeilen der Wickeltabelle nach Figur 6 vom Wickelautomaten abgearbeitet und dabei in wechselnder Folge die ungeteilten Spulen und die geteilten Spulen durchgewickelt. Mit dieser Wickeltabelle ergibt sich für das zweite Ausführungsbeispiel, das gemäß Figur 7 die geteilten Spulen S2, S4, S6 ... jeweils als Spukahälften S2a und S2b, S4a und S4b, S6a und S6b ... in Reihenschaltung nacheinander durchgewickelt werden. Außerdem sind auch hier in gleicher Weise wie beim ersten Ausführungsbeispiel die Spulen S an den Lamellen L gemäß der Ausführung nach Figur 3c angehakt.

In einem dritten Ausführungsbeispiel wird gemäß Figur 8 ein erster Abschnitt a einer Wickeltabelle dargestellt, bei der im Hinblick auf das zweite Ausführungsbeispiel lediglich der Wickelsinn der Spulen S geändert wurde. Dabei ergibt sich auch eine geänderte Drahtführung zwischen den Spulen S und den Lamellen L.

Dazu ist in Figur 9 dargestellt, dass der Wickeldraht 17 auch hier mit seinem Anfang 17a an Lamelle L1 kontaktiert wird. Von dort aus wird nun auf den Polzahn Z3 die Spule S1 mit 10 Windungen rechts herum gewickelt und das Spulenende wird sodann mit der Lamelle L8 kontaktiert. Von dort wird nun der Wickeldraht zum Polzahn Z5 geführt. Dort wird die ersten Spulenhälfte S2a mit 7 Windungen links herum gewickelt und der Wickeldraht sodann zum Polzahn Z8 geführt. Dort wird nun die zweite Spulenhälfte S2b mit 7 Windungen links herum gewickelt und das Spulenende mit der Lamelle L15 kontaktiert. Von dort wird nun auf dem Polzahn Z10 die Spule S3 mit 10 Windungen rechts herum gewickelt und das Spulenende sodann mit der Lamelle L2 kontaktiert. Von dort wird sodann der Wickeldraht zum Polzahn Z2 geführt und dort wird die erste Hälfte S4a der vierten Spule mit 7 Windungen links herum gewickelt. Sodann wird der Wickeldraht zum Zahn S5 geführt und die zweite Wickelhälfte S4b wird mit 7 Windungen links herum gewickelt. Das Spulenende wird sodann mit Lamelle L9 kontaktiert. In gleicher Weise werden nun alle übrigen Spulen beziehungsweise Spulenhälften nacheinander vom Wickelautomaten gemäß der Wickeltabelle nach Figur 8 nacheinander durchgewickelt. Bei dieser Ausführung können Durchführungen der Spulenenden durch benachbarte Nuten vermieden werden, da ein direktes Anhaken der Spulenanschlüsse an die Lamellen L gemäß der Ausführung nach Figur 3a möglich ist, wonach zwischen der Zuführung und Abführung des Wickeldrahtes an den Lamellen L zwei Polzähne liegen.

Figur 10 zeigt in einem vierten Ausführungsbeispiel die Wickeltabelle für eine elektrische Maschine 10 aus Figur 1, bei der nunmehr alle Spulen S geteilt auf jeweils zueinander gegenüberliegende Polzähne Z gewickelt werden. Die Spulenhälften sind dabei jeweils zueinander in Reihe geschaltet. Für diese elektrische Maschine gelten folgende Vorgaben:

| | |
|---|---|
| Polpaarzahl | p = 3 |
| Polzähnezahl | Z = 10 |
| Lamellenzahl | L = 20 |
| Spulenzahl | S = 20 |
| Lamellenschrittweite | Y = 7 |
| Windungszahl | Wz = 2 x 6 beziehungsweise 7 und 6 |
| Versatzwinkel | $\varphi$ =12° |

In Figur 11 wird nunmehr die Herstellung der ersten vier Spulen S1 bis S4 gemäß Abschnitt a nach der Wickeltabelle aus Figur 10 mit den 8 Teilspulen S1a, S1b bis S4a, S4b in einer Läuferabwicklung schematisch dargestellt und im Folgenden beschrieben.

Der Wickeldraht 17 wird zunächst mit seinem Anfang 17a an der Lamelle L1 kontaktiert. Von dort wird er nun durch die Nut N10 zur Läuferrückseite geführt und sodann auf dem Polzahn Z1 die Spulenhälfte S1a mit 6 Windungen rechts herum gewickelt. Danach wird der Wickeldraht über die Läuferrückseite durch die Nut N8 zur Kommutatorseite und von dort zum Polzahn Z6 geführt. Dort wird die zweite Spulenhälfte S1b mit 6 Windungen links herum gewickelt und das Spulenende wird sodann mit der Lamelle L8 kontaktiert. Von dort aus wird nun auf den Polzahn Z3 die Spulenhälfte S2a mit 7 Windungen links herum gewickelt und der Wickeldraht sodann durch die Nut N10 zur Läuferrückseite und dann zum Polzahn Z8 geführt. Dort wird die Spulenhälfte S2b mit 6 Windungen rechts herum gewickelt und das Spulenende wird sodann mit der Lamelle L15 kontaktiert. Von dort wird nun der Wickeldraht durch die Nut N7 zur Läuferrückseite geführt und die Spule S3a auf den Polzahn Z8 mit 7 Windungen rechts herum gewickelt. Von dort aus wird der Wickeldraht durch Nut N5 zur Kommutatorseite geführt und auf dem Polzahn Z3 die zweite Spulenhälfte S3b mit 6 Windungen links herum gewickelt. Das Spulenende wird sodann mit der Lamelle L2 kontaktiert. Von dort wird nun auf dem Polzahn Z10 die Spulenhälfte S4a mit 7 Windungen links herum gewickelt und der Wickeldraht sodann durch die Nut N7 zur Läuferrückseite geführt. Von dort gelangt er zum Polzahn Z5. Dort wird die zweite Spulenhälfte S4b mit 6 Windungen rechts herum gewickelt und das Spulenende wird sodann mit der Lamelle L9 kontaktiert.

In gleicher Weise werden nunmehr die nachfolgenden Zeilen der Wickeltabelle nach Figur 10 mit einem Wikkelautomaten abgearbeitet und dabei die Spulen S5 bis S20 jeweils zur Hälfte in Reihe geschaltet auf einander gegenüberliegende Polzähne gewickelt. Bei diesem Ausführungsbeispiel werden die Spulenanschlüsse an den Lamellen L durch Anhaken nach der Ausführung gemäß Figur 3b realisiert, wonach bei einem Teil der Anschlüsse zwischen der Drahtzu- und abführung and Lamellen L jeweils ein Polzahn Z und bei einem anderen Teil jeweils zwei Polzähne Z liegen.

In einem fünften Ausführungsbeispiel wird nunmehr für eine elektrische Maschine 10 nach Figur 1 eine Wikkeltabelle erstellt, wonach alle Spulen in zwei Spulenhälfte a und b auf jeweils zueinander gegenüberliegende Polzähne aufgeteilt werden und wobei im Gegensatz zum vorherigen Ausführungsbeispiel die Spulenhälften Sa und Sb zu ihren gemeinsamen Anfangs- und Endlamellen La und Le parallel geschaltet werden. Um zwischen dem Kommutator 16 und dem Bleckpaket 14 des Läufers 13 eine unproblematische geordnete Leiterführung zu gewährleisten, werden jeweils die ersten Spulenhälften Sa der 20 Spulen S vom Wickelautomaten in einem ersten Wickelstrang A durchgewickelt und danach werden die zweiten Spulenhälfte Sb in einem zweiten Wickelstrang B nacheinander durchgewickelt. Dadurch wird erreicht, dass im ersten Strang der nacheinander durchgewickelten Spulenhälften Sa der Wickeldraht von der jeweiligen Spulenhälfte zur Lamelle L sowie von der Lamelle zur nächsten Spulenhälfte Sa jeweils über einen auf der Läuferwelle angeordneten Stützring 19 hinweg geführt werden kann.

Für das fünfte Ausführungsbeispiel gelten folgende Vorgaben:

| | |
|---|---|
| Polpaarzahl | p = 3 |
| Polzähnezahl | Z = 10 |
| Lamellenzahl | L = 20 |
| Spulenzahl | Sa = 20; Sb = 20 |
| Lamellenschrittweite | Y = 7 |
| Windungszahl | Wz = 14 beziehungsweise 13 |
| Versatzwinkel | $\varphi = 0°$ |

In Figur 13a wird die Herstellung der Spulenhälften S1a bis S4a nach der Wickeltabelle aus Figur 12 gemäß dem Tabellenabschnitt a in einer Läuferabwicklung schematisch dargestellt und im Folgenden beschrieben.

Der Wickeldraht 17 wird zunächst mit seinem Anfang 17a an der Lamelle L1 kontaktiert. Er wird sodann von dort nach rechts zum Polzahn Z8 geführt. Dort wird die erste Spulenhälfte S1a mit 14 Windungen links herum gewickelt und das Spulenende wiederum nach rechts geführt und mit der Lamelle L8 kontaktiert. Von dort wird nun der Wickeldraht nach rechts zum Polzahn Z10 geführt. Dort wird die Spulenhälfte S2a mit 13 Windungen rechts herum gewickelt und das Spulenende wird sodann nach rechts geführt und mit der Lamelle L15 kontaktiert. Von dort wird nun der Wickeldraht nach rechts zum Polzahn Z5 geführt. Dort wird die Spulenhälfte S3a mit 14 Windungen links herum gewickelt und das Spulenende sodann nach rechts geführt und mit der Lamelle L2 kontaktiert. Von dort wird nun der Wickeldraht wiederum nach rechts zum Polzahn Z7 geführt. Dort wird durch die Spule S4a mit 13 Windungen rechts herum gewickelt und das Spulenende wird sodann nach rechts geführt und mit der Lamelle L9 kontaktiert. Von dort aus arbeitet nun der Wickelautomat alle weiteren Zeilen aus der ersten Hälfte der Wickeltabelle in Figur 12 zur Herstellung der übrigen ersten Spulen hälften S5a bis S20a ab. In Figur 13a werden dabei die Spulendrähte von der rechten Seite gestrichelt zur linken Seite der Läuferabwicklung übergeleitet. Die Kontaktierung der Spulenhälften Sa an den Lamellen L erfolgt hier durch Umhaken gemäß Figur 3d, wonach der Wickeldraht zwischen Lamelle und Spule jeweils über einen Stützring 19 hinweggeführt wird, wobei die Spulen zur Lamelle jeweils am Umfang des Läufers um mindestens 90° versetzt sind.

In Figur 13b wird nunmehr die Herstellung der zweiten Spulenhälften Sb aus der Wickeltabelle nach Figur 12 gemäß dem Tabellenabschnitt b in einer Läuferabwicklung schematisch dargestellt und im Folgenden beschrieben.

Nachdem die ersten Spulenhälfte 20a der zwanzigsten Spule auf den Polzahn Z3 gewickelt und das Spulenende mit Lamelle L1 kontaktiert ist, wird der Wickeldraht 17 nun von Lamelle L1 zum Polzahn Z3 geführt. Dort wird die Spulenhälfte S1b mit 14 Windungen rechts herum gewickelt und das Spulenende sodann mit der Lamelle L8 kontaktiert. Von dort wird nun der Wickeldraht durch die Nut N5 hindurch zur Läuferrückseite geführt und sodann auf den Polzahn Z5 die Spulenhälfte S2b mit 12 Windungen links herum gewickelt. Das Spulenende wird sodann über die Läuferrückseite durch die Nut N7 geführt und auf der Kommutatorseite mit der Lamelle L15 kontaktiert. Von dort wird nun auf dem Polzahn Z10 die Spulenhälfte S3b mit 14 Windungen rechts herum gewickelt und das Spulenende mit der Lamelle L2 kontaktiert. Von dort wird nun der Wickeldraht durch die Nut N2 zur Läuferrückseite geführt und sodann auf dem Polzahn Z2 die Spule S4b mit 12 Windungen links herum gewickelt. Das Spulenende wird sodann über die Läuferrückseite durch die Nut N4 zur Kommutatorseite geführt und dort mit der Lamelle L9 kontaktiert. Von dort aus werden alle weiteren zweiten Spulenhälften S5b bis S20b nacheinander auf den Polzähnen durchgewickelt und auf diese Weise die zweite Hälfte der Wickeltabelle nach Figur 12 vom Wickelautomaten abgearbeitet. Die Kontaktierung der Spulenhälften Sb mit den Lamellen L erfolgt hier durch Anhaken gemäß dem Schema nach Figur 3a, wonach zwischen Zuführung und Abführung des Wickeldrahtes an den Lamellen jeweils zwei Polzähne Z liegen. Durch die Aufteilung der Spulenherstellung in zwei Wickelsträngen nach der Wickeltabelle aus Figur 12 wird gewährleistet, dass die Spulenanschlüsse durch das Umhaken an den Lamellen L im ersten Strang der Wickeltabelle die Spulenanschlüsse des zweiten Wickelstranges durch Anhaken an den Lamellen L nicht behindern, so wie umgekehrt das Anhaken im zweiten Strang das Umhaken im ersten Strang nicht behindert.

In Abwandlung zum vorherigen Ausführungsbeispiel wird nun in einem sechsten Ausführungsbeispiel eine gemäß Figur 14 teilweise dargestellte Wickeltabelle erstellt, bei der für die vierzig Spulenhälften der Wickelsinn geändert wird. Außerdem sollen hierbei im ersten Strang der durchgewickelten Spulenhälften S1a bis S20a die Spulenanschlüssen an den Lamellen L nicht durch Umhaken gemäß Figur 13a, sondern durch Anhaken gemäß Figur 13b realisiert werden. Dazu müssen in verstärktem Maß die Spulenenden über die Läuferrückseite durch weitere Nuten N hindurchgeführt werden, die den jeweiligen Lamelleanschluss näher liegen. In Figur 15 wird nunmehr die Herstellung der Spulenhälften S1a bis S4a der Wickeltabelle nach Figur 14 gemäß dem Tabellenabschnitt a in einer Läuferabwicklung schematisch dargestellt und im Folgenden beschrieben.

Der Wickeldraht 17 wird zunächst mit seinem Anfang 17a an der Lamelle L1 kontaktiert. Von dort wird nun der Wickeldraht durch die Nut N10 zur Läuferrückseite und sodann auf dem Polzahn Z8 geführt. Dort wird die Spulen S1a mit 12 Windungen rechts herum gewickelt und das Spulenende wird sodann durch die Nut N5 zur Kommutatorseite geführt und hier mit der Lamelle L8 kontaktiert. Von dort wird nun der Wickeldraht durch die Nut N3 zur Läuferrückseite und sodann durch die Nut N2 zum Polzahn Z10 geführt. Dort wird die Spule S2a mit 12 Windungen links herum gewickelt und das Spulenende wird sodann mit der Lamellen L15 kontaktiert. Von dort wird nun der Wickeldraht durch die Nut N7 zur Läuferrückseite und sodann zum Polzahn Z5 geführt. Dort wird die Spulenhälfte S3a mit 12 Windungen rechts herum gewickelt und das Spulenende über die Läuferrückseite und durch die Nut N2 zur Kommutatorseite geführt und hier mit der Lamelle L2 kontaktiert. Von dort wird nun der Wickeldraht durch die Nut N10 zur Läuferrückseite und von dort durch die Nut N9 zur Kommutatorseite geführt. Von dort wird nun auf dem Polzahn Z7 die Spulenhälfte S4a mit 12 Windungen links herum gewickelt und das Spulenende sodann mit der Lamelle L9 kontaktiert. In gleicher Weise werden anschließend alle weiteren Spulenhälften S5a bis S20a und S1b bis S20b hergestellt. Der Spulenanschluss an die Lamellen L erfolgt hier in Abwandlung zu Figur 13a durch Anhaken des Wickeldrahtes statt Umhaken an den Lamellen L.

Die Erfindung ist nicht auf die dargestellten Ausführungsbeispiele beschränkt, da sich im Rahmen der Vorgaben zur Polpaarzahl, Zähnezahl und Lamellenschrittweite eine Vielzahl von Kombinationen zur Realisierung der Läuferwicklung einer elektrischen Maschine 10 gemäß Figur 1 ergibt. Ferner ist es möglich, dass auch bei Wickelausführungen ohne eine Aufteilung der Spulen die nacheinander durchgewickelten Spulen S in zwei gegebenenfalls unterschiedlich große Wickelstränge aufzuteilen und dabei die Spulen des ersten Wickelstranges durch Umhaken an den Lamellen L zu kontaktieren. Zur problemfreien Kontaktierung der Spulen S mit den Lamellen L ist es gegebenenfalls vorteilhaft, wenn Spulen mit einem Winkelfehler Wf und Spulen ohne Winkelfehler Wf in gleichmäßiger Folge durchgewickelt werden. Weil dafür zumindest bei einem Teil der Spulen S der Wickeldraht zu den Lamellen L beziehungsweise von den Lamellen L durch eine näher gelegene Nut geführt werden muss, ist es gegebenenfalls zur Erzielung einer besseren Kommutierung und geringeren Drehmomentenwelligkeit zweckmäßig, wenn zumindest bei einem Teil der auf gegenüberliegenden Polzähnen Z aufgeteilten Spulen S jeweils die Spulenhälften Sa und Sb mit unterschiedlichen Windungszahlen gewickelt werden, wie dies bei den Wickeltabellen gemäß Figur 10 und 12 der Fall ist. Der Winkelversatz φ zwischen den Polzahn 1 und dem Schlitz der Lamelle L1 wird vorzugsweise so gewählt, dass die Lamelle L1 möglichst nicht vor einer Nut N steht, durch die der Wickeldraht von der Lamelle L1 zur Spule S1 geführt wird.

Weitere Alternativen zur erfindungsgemäßen Herstellung der Läuferspulen S von elektrischen Maschinen ergeben sich dadurch, dass in einem ersten durchgewickelten Spulenstrang die Spulenhälften der geteilten Spulen zueinander parallel geschaltet werden und dass in einem zweiten Spulenstrang die Spulenhälften der übrigen geteilten Spulen jeweils zueinander in Reihe geschaltet werden. Eine weitere Alternative bei den geteilten Spulen wäre es, wenn die ersten Spulenhälften Sa in einem ersten Wickelstrang durchgewickelt werden und die zweiten Spulenhälften Sb jeweils nochmals geteilt in zwei Teilspulen Sb1 und Sb2 zueinander in Reihe geschaltet im zweiten Wickelstrang durchgewickelt werden.

## Patentansprüche

1. Verfahren zur Herstellung der Läuferwicklung einer elektrischen Maschine (10), vorzugsweise eines Gleichstrommotors, mit mindestens vier Erregerpolen (P) im Stator (11) und mit einem Kommutatorläufer (13), der eine Anzahl von Nuten (N) und Polzähnen (Z) am Umfang aufweist, die von der Anzahl der Erregerpole abweicht und mit einer Anzahl von Einzelzahnspulen (S) und gleich große Anzahl von Kommutatorlamellen (L), die mindestens doppelt so groß wie die Anzahl der Polzähne ist, wobei die Einzelzahnspulen auf die Polzähne gleichmäßig verteilt gewickelt, vorzugsweise durchgewickelt werden und mit einer vorgegebenen Lamellenschrittweite (Y) an Anschlussfahnen (16a) der Lamellen kontaktiert werden, wobei von der ersten Spule (S1) ausgehend die nacheinander gewickelten Spulen jeweils auf denjenigen Polzahn (Z) mit dem geringsten, auf eine Polteilung (360°2p) bezogenen elektrischen Winkelfehler (Wf) gewickelt werden, und wobei zumindest bei einem zuletzt gewickelten Wickelstrang (B) der Spulen (S), vorzugsweise bei allen Spulen, der jeweils zwischen zwei Spulen (S) mit einer Lamelle (L) kontaktierte Wickeldraht (17) von der einen Seite der Lamelle (L) zugeführt und von der anderen Seite weggeführt wird und wobei zwischen der Nut (N), aus der der Wickeldraht (17) der Lamelle (L) zugeführt wird und der Nut (N), zu der er von der Lamelle (L) weggeführt wird, mindestens ein Polzahn (Z) liegt, jedoch höchstens zwei Polzähne (Z) liegen, **dadurch gekennzeichnet, dass** bei einem, vorzugsweise ersten, Wickelstrang (A) der nacheinander durchgewickelten Spulen der Wickeldraht (17) von der Spule (S) zur Lamelle (L) sowie von der Lamelle (L) zur nächsten Spule (S) jeweils über einen auf einer Läuferwelle (15) angeordneten Stützring (19) hinweggeführt wird, wobei die Spulen (S) zur Lamelle (L) jeweils am Umfang des Läufers um mindestens 90° versetzt sind.

**2.** Verfahren nach Anspruch 1, **dadurch gekennzeichnet, dass** zumindest bei einem Wickelstrang (A beziehungsweise B) der nacheinander durchgewickelten Spulen (S) der Wickeldraht (17) von der Spule (S) zur Lamelle (L) beziehungsweise von der Lamelle (L) zur Spule (S) jeweils zwischen zwei weiteren, der Lamelle (L) näher liegenden Polzähnen (Z) hindurchgeführt wird, so dass zwischen der Lamelle (L) und der Durchführung des Wickeldrahtes (17) höchstens zwei Polzähne (Z) liegen.

**3.** Verfahren nach einem der vorherigen Ansprüche, **dadurch gekennzeichnet, dass** zumindest die mit einem Winkelfehler (Wf) zur Polteilung (Pt) versehenen Spulen (S) auf zwei einander gegenüberliegende Polzähne (Z) angeordnet werden.

**4.** Verfahren nach Anspruch 3, **dadurch gekennzeichnet, dass** alle Spulen (S) geteilt auf jeweils zwei zueinander gegenüberliegende Polzähne (Z) gewickelt werden.

**5.** Verfahren nach Anspruch 3 oder 4, **dadurch gekennzeichnet, dass** die geteilten Spulen (S) jeweils als Spulenhälften (Sa, Sb) in Reihenschaltung nacheinander durchgewickelt werden.

**6.** Verfahren nach Anspruch 3 oder 4, **dadurch gekennzeichnet, dass** die geteilten Spulen (S) jeweils als Spulenhälften (Sa, Sb) zu ihren gemeinsamen Anfangs- und Endlamellen (La, Lb) parallel geschaltet werden.

**7.** Verfahren nach einem der vorherigen Ansprüche, **dadurch gekennzeichnet, dass** Spulen (S) mit einem Winkelfehler (Wf) und Spulen (S) ohne Winkelfehler in gleichmäßiger Folge durchgewickelt werden.

**8.** Verfahren nach einem der vorherigen Ansprüche, **dadurch gekennzeichnet, dass** zumindest bei einem Teil der auf gegenüberliegenden Polzähnen (Z) aufgeteilten Spulen (S) jeweils die Spulenhälften (Sa, Sb) mit unterschiedlichen Windungszahlen gewickelt werden.

**9.** Elektrische Maschine, insbesondere Gleichstrommaschine (10) mit mindestens vier Erregerpolen (P) im Stator (11) und mit einem Kommutatorläufer (13), der eine Anzahl von Nuten (N) und Polzähnen (Z) am Umfang aufweist, die von der Anzahl der Erregerpole (P) abweicht und mit einer Läuferwicklung (18), deren Anzahl von Einzelzahnspulen (S) gleich der Anzahl von Kommutaterlamellen (L) ist;welche mindestens doppelt so groß wie die Anzahl der Polzähne (Z) ist, wobei die Einzelzahnspulen (S) auf den Polzähnen (Z) gleichmäßig verteilt gewickelt, vorzugsweise durchgewickelt sind und wobei die nacheinander gewickelten Spulen (S) jeweils auf denjenigen Polzahn (Z) mit dem geringsten, auf eine Pulteilung (360°/2p) bezogenen elektrischen Winkelfehler (Wf) gewickelt sind, und wobei zumindest bei einem zuletzt gewickelten Wickelstrang (B) der Spulen (S), vorzugsweise bei allen Spulen, der jeweils zwischen zwei Spulen (S) mit einer Lamelle (L) kontaktierte Wickeldraht (17) von der einen Seite der Lamelle (L) zugeführt und von der anderen Seite weggeführt wird und wobei zwischen der Nut (N), aus der der Wickeldraht (17) der Lamelle (L) zugeführt wird und der Nut (N), zu der er von der Lamellen (L) weggeführt wird, mindestens ein Polzahn (Z) liegt, jedoch höchstens zwei Polzähne (Z) liegen, **dadurch gekennzeichnet, dass** bei einem, vorzugsweise ersten, Wickelstrang (A) der nacheinander durchgewickelten Spulen der Wickeldraht (17) von der Spule (S) zur Lamelle (L) sowie von der Lamelle (L) zur nächsten Spule (S) jeweils über einen auf einer Läuferwelle (15) angeordneten Stützring (19) hinweggeführt wird, wobei die Spulen (S) zur Lamelle (L) jeweils am Umfang des Läufers um mindestens 90° versetzt sind.

## Claims

1. Method for producing the rotor winding of an electrical machine (10), preferably of a DC motor, having at least four exciter poles (P) in the stator (11) and having a commutator rotor (13) which has a number of slots (N) and pole teeth (Z) over the circumference which differs from the number of exciter poles, and having a number of individual tooth-wound coils (S) and the same number of commutator laminates (L) which is at least twice as high as the number of pole teeth, with the individual tooth-wound coils being wound onto, preferably wound through, the pole teeth in a uniformly distributed manner and being contacted at connection lugs (16a) of the laminates at a predefined laminate step width (Y), with, starting from the first coil (S1), the coils which are wound one after the other each being wound onto that pole tooth (Z) with the lowest electrical angle error (Wf) in relation to a pole pitch (360°/2p), and with, at least in the case of a last-wound winding section (B) of the coils (S), preferably in the case of all the coils, the winding wire (17) with which a laminate (L) makes contact in each case between two coils (S) being fed from one end of the laminate (L) and guided away from the other end, and with there being at least one pole tooth (Z) between the slot (N) from which the winding wire (17) is fed to the laminate (L) and the slot (N) at which the said winding wire is guided away from the laminate (L), but there being at most two pole teeth (Z), **characterized in that** in the case of a, preferably first, winding section (A) of the coils which are wound-through one after the other, the winding wire (17) is guided away from the coil (S) to the laminate (L) and from the laminate (L) to the next coil (S) in each case via a supporting ring (19) which is arranged on a rotor shaft (15), with the coils (S) being offset through at least 90° in relation to the laminate (L) in each case over the circumference of the rotor.

2. Method according to Claim 1, **characterized in that**, at least in the case of a winding section (A or B) of the coils (S) which are wound-through one after the other, the winding wire (17) is guided through from the coil (S) to the laminate (L) or from the laminate (L) to the coil (S) in each case between two further pole teeth (Z) which are situated closer to the laminate (L), so that there are at most two pole teeth (Z) between the laminate (L) and the bushing of the winding wire (17).

3. Method according to either of the preceding claims, **characterized in that** at least the coils (S) which are provided with an angle error (Wf) in relation to the pole pitch (Pt) are arranged on two pole teeth (Z) which are opposite one another.

4. Method according to Claim 3, **characterized in that** all the coils (S) are wound, in a divided manner, onto in each case two pole teeth (Z) which are situated opposite one another.

5. Method according to Claim 3 or 4, **characterized in that** the divided coils (S) are each wound-through one after the other in a series circuit as coil halves (Sa, Sb).

6. Method according to Claim 3 or 4, **characterized in that** the divided coils (S) are each connected in parallel to their common start and end laminates (La, Lb) as coil halves (Sa, Sb).

7. Method according to one of the preceding claims, **characterized in that** coils (S) with an angle error (Wf) and coils (S) without an angle error are wound-through in a uniform sequence.

8. Method according to one of the preceding claims, **characterized in that**, at least in the case of some of the coils (S) which are divided between opposing pole teeth (Z), the coil halves (Sa, Sb) are each wound with different numbers of turns.

9. Electrical machine, in particular DC machine (10), having at least four exciter poles (P) in the stator (11) and having a commutator rotor (13) which has a number of slots (N) and pole teeth (Z) over the circumference which differs from the number of exciter poles (P), and having a rotor winding (18), the number of individual tooth-wound coils (S) of the said rotor winding being the same as the number of commutator laminates (L) which is at least twice as high as the number of pole teeth (Z), with the individual tooth-wound coils (S) being wound onto, preferably wound through, the pole teeth (Z) in a uniformly distributed manner, and with the coils (S) which are wound one after the other each being wound onto that pole tooth (Z) with the lowest electrical angle error (Wf) in relation to a pole pitch (360°/2p), and with, at least in the case of a last-wound winding section (B) of the coils (S), preferably in the case of all the coils, the winding wire (17) with which a laminate (L) makes contact in each case between two coils (S) being fed from one end of the laminate (L) and guided away from the other end, and with there being at least one pole tooth (Z) between the slot (N) from which the winding wire (17) of the laminate (L) is fed and the slot (N) at which it is guided away from the laminate (L), but there being at most two pole teeth (Z), **characterized in that** in the case of a, preferably first, winding section (A) of the coils which are wound-through one after the other, the winding wire (17) is guided away from the coil (S) to the laminate (L) and from the laminate (L) to the next coil (S) in each case via a supporting ring (19) which is arranged on a rotor shaft (15), with the coils (S) being offset through at least 90° in relation to the laminate (L) in each case over the circumference of the rotor.

**Revendications**

1. Procédé de fabrication de l'enroulement de rotor d'une machine électrique (10), de préférence d'un moteur à courant continu, comprenant au moins quatre pôles excitateurs (P) dans le stator (11) et comprenant un collecteur de rotor (13) qui présente un certain nombre de rainures (N) et de dents polaires (Z) sur le pourtour, lequel est différent du nombre de pôles excitateurs, et un certain nombre de bobines de dent individuelles (S) et un nombre égal de lamelles de collecteur (L), lequel est au moins égal au double du nombre de dents polaires, les bobines de dent individuelles étant enroulées selon une distribution régulière sur les dents polaires, de préférence enroulées en continu, et étant mises en contact avec un pas de lamelle (Y) prédéfini sur les barrettes de raccordement (16a) des lamelles, procédé selon lequel, à partir de la première bobine (S1), les bobines enroulées les unes après les autres sont respectivement enroulées sur la dent polaire (Z) ayant l'erreur angulaire (Wf) électrique la plus faible, rapportée au pas polaire (360°/2p), et selon lequel, au moins pour une branche d'enroulement enroulée en dernier (B) des bobines (S), de préférence pour toutes les bobines, le fil d'enroulement (17) qui est à chaque fois mis en contact avec une lamelle (L) entre deux bobines (S) est acheminé d'un côté de la lamelle (L) et s'éloigne de l'autre côté, et selon lequel il existe au moins une dent polaire (Z), mais au maximum deux dents polaires (Z) entre la rainure (N) depuis laquelle le fil d'enroulement (17) est acheminé à la lamelle (L) et la rainure (N) vers laquelle il est amené en s'éloignant de la lamelle (L), **caractérisé en ce que** pour une, de préférence une première branche d'enroulement (A) des bobines enroulées en continu les unes après les autres, le fil d'enroulement (17) est acheminé de la bobine (S) vers la lamelle (L) ainsi que de la lamelle (L) vers la prochaine bobine (S) à chaque fois par le biais d'une bague support (19) montée sur un arbre de rotor (15), les bobines (S) étant à chaque fois décalées d'au moins 90° par rapport à la lamelle (L) sur le pourtour du rotor.

2. Procédé selon la revendication 1, **caractérisé en ce qu'**au moins pour une branche d'enroulement (A ou B) des bobines (S) enroulées en continu les unes après les autres, le fil d'enroulement (17) est acheminé de la bobine (S) vers la lamelle (L) ou de la lamelle (L) vers la bobine (S) à chaque fois en passant entre deux dents polaires (Z) supplémentaires plus proches de la lamelle (L), de sorte qu'il existe un maximum de deux dents polaires (Z) entre la lamelle (L) et la traversée du fil d'enroulement (17).

3. Procédé selon l'une des revendications précédentes, **caractérisé en ce que** les bobines (S) qui présentent une erreur angulaire (Wf) par rapport au pas polaire (Pt) sont disposées sur deux dents polaires (Z) opposées l'une à l'autre.

4. Procédé selon la revendication 3, **caractérisé en ce que** toutes les bobines (S) sont enroulées en étant à chaque fois partagées sur deux dents polaires (Z) opposées l'une à l'autre.

5. Procédé selon la revendication 3 ou 4, **caractérisé en ce que** les bobines (S) partagées sont à chaque fois enroulées en continu les unes après les autres sous la forme de moitiés de bobine (Sa, Sb) en un circuit série.

6. Procédé selon la revendication 3 ou 4, **caractérisé en ce que** les bobines (S) partagées sont à chaque fois branchées en parallèle sous la forme de moitiés de bobine (Sa, Sb) avec leurs lamelles de départ et de fin (La, Lb) communes.

7. Procédé selon l'une des revendications précédentes, **caractérisé en ce que** les bobines (S) ayant une erreur angulaire (Wf) et les bobines (S) sans erreur angulaire sont enroulées en continu selon la même séquence.

8. Procédé selon l'une des revendications précédentes, **caractérisé en ce qu'**au moins pour une partie des bobines (S) réparties sur les dents polaires (Z) opposées, les moitiés de bobine (Sa, Sb) sont à chaque fois enroulées avec des nombres de spires différents.

9. Machine électrique, notamment machine à courant continu (10), comprenant au moins quatre pôles excitateurs (P) dans le stator (11) et comprenant un collecteur de rotor (13) qui présente un certain nombre de rainures (N) et de dents polaires (Z) sur le pourtour, lequel est différent du nombre de pôles excitateurs (P), et comprenant un enroulement de rotor (18) dont le nombre de bobines de dent individuelles (S) est égal au nombre de lamelles de collecteur (L), lequel est au moins égal au double du nombre de dents polaires (Z), les bobines de dent individuelles (S) étant enroulées selon une distribution régulière sur les dents polaires (Z), de préférence enroulées en continu, et les bobines (S) enroulées les unes après les autres étant respectivement enroulées sur la dent polaire (Z) ayant l'erreur angulaire (Wf) électrique la plus faible, rapportée à un pas polaire (360°/2p), et au moins pour une branche d'enroulement enroulée en dernier (B) des bobines (S), de préférence pour toutes les bobines, le fil d'enroulement (17) qui est à chaque fois mis en contact avec une lamelle (L) entre deux bobines (S) étant acheminé d'un côté de la lamelle (L) et s'éloigne de l'autre côté, et au moins une dent polaire (Z), mais au maximum deux dents polaires (Z), étant présente entre la rainure (N) depuis laquelle le fil d'enroulement (17) est acheminé à la lamelle (L) et la rainure (N) vers laquelle il est amené en s'éloignant de la lamelle (L), **caractérisé en ce que** pour une, de préférence une première branche d'enroulement (A) des bobines enroulées en continu les unes après les autres, le fil d'enroulement (17) est acheminé de la bobine (S) vers la lamelle (L) ainsi que de la lamelle (L) vers la prochaine bobine (S) à chaque fois par le biais d'une bague support (19) montée sur un arbre de rotor (15), les bobines (S) étant à chaque fois décalées d'au moins 90° par rapport à la lamelle (L) sur le pourtour du rotor.

FIG. 1

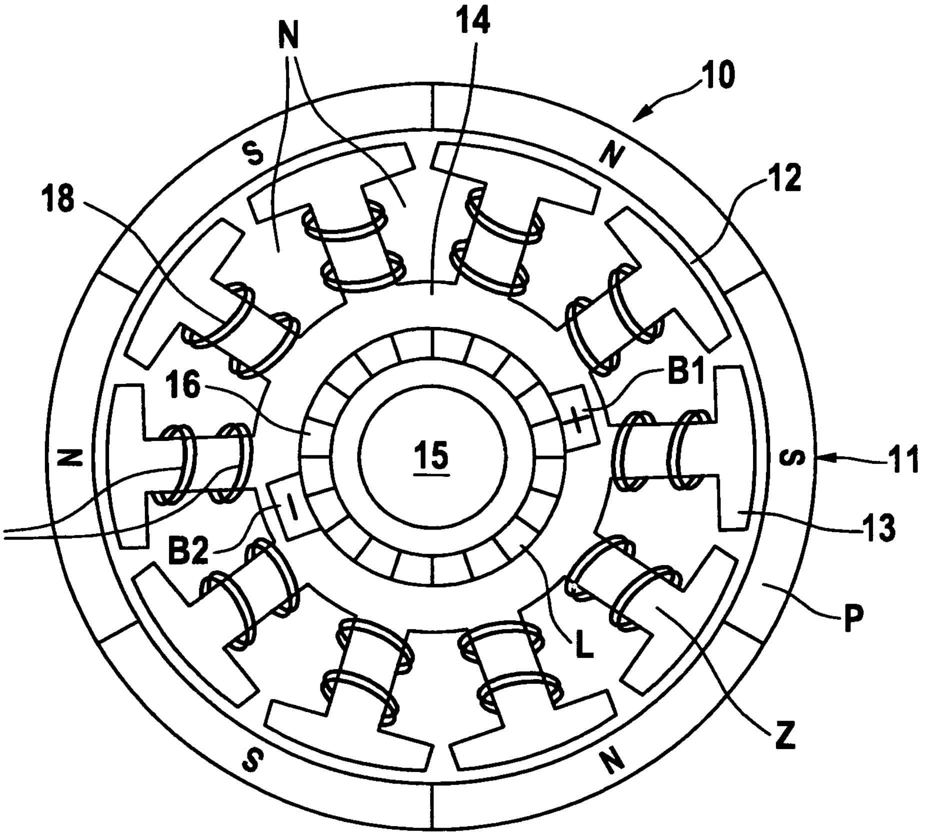
N
14
10
S
N
18
12
16
B1
N
15
S
11
S
B2
13
P
L
Z
S
N

FIG. 2

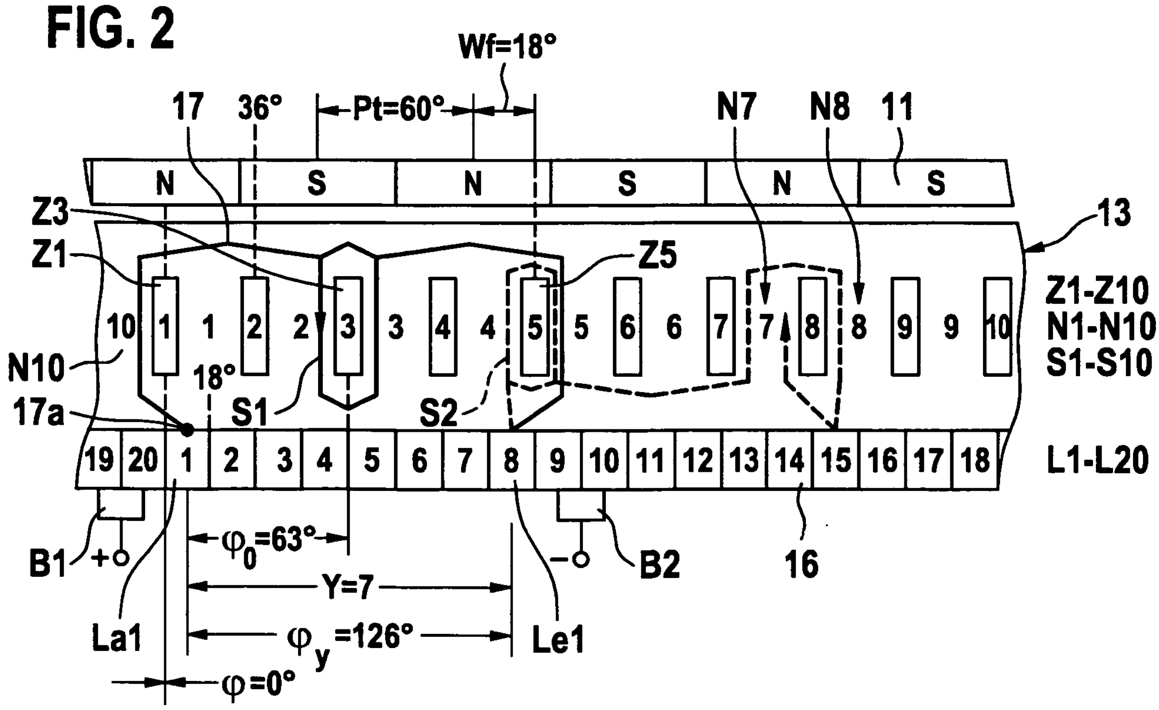
Wf=18°
17
36°
Pt=60°
N7
N8
11
N
S
N
S
N
S
Z3
13
Z1
Z5
Z1-Z10
N1-N10
S1-S10
N10
18°
17a
S1
S2
L1-L20
B1
B2
16
φ0=63°
Y=7
La1
φy=126°
Le1
φ=0°

FIG. 3A

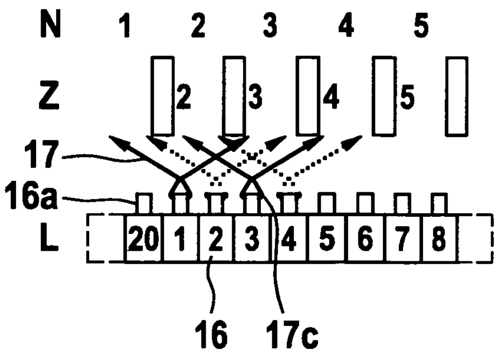


FIG. 3B

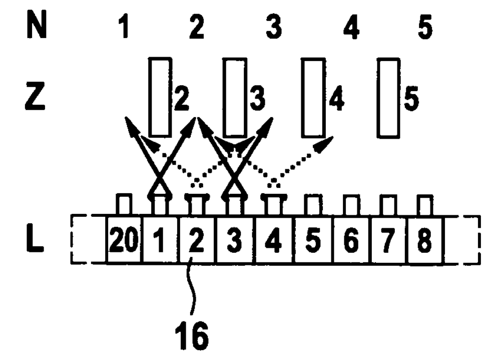


FIG. 3C

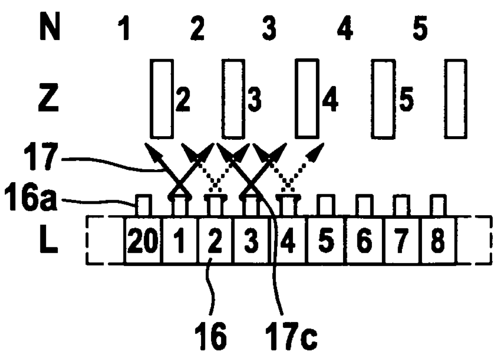


FIG. 3D

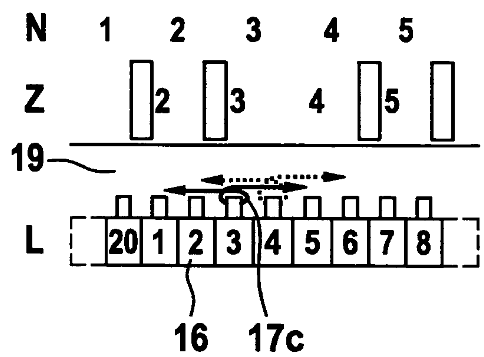


FIG. 3E

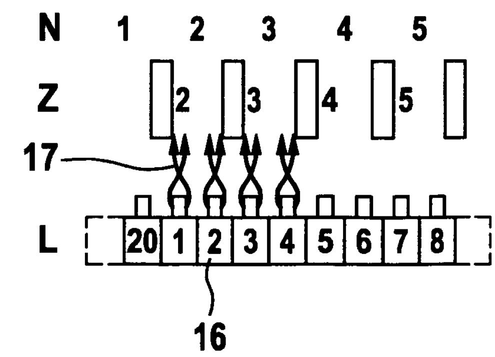


FIG. 3F

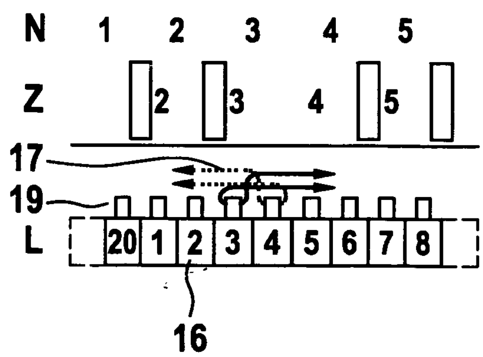

# FIG. 4

| Spule | La | N | Polzahn | Wdg. | re/li | N | N | Le | |
|---|---|---|---|---|---|---|---|---|---|
| 1 | 1 | 10 | 3 | 14 | li | 5 | - | 8 | a |
| 2 | 8 | - | 5 | 15 | re | 7 | 8 | 15 | |
| 3 | 15 | 7 | 10 | 14 | li | 2 | - | 2 | |
| 4 | 2 | - | 2 | 15 | re | 4 | 5 | 9 | |
| 5 | 9 | 4 | 7 | 14 | li | 9 | - | 16 | b |
| 6 | 16 | - | 9 | 15 | re | 1 | 2 | 3 | |
| 7 | 3 | 1 | 4 | 14 | li | 6 | - | 10 | |
| 8 | 10 | - | 6 | 15 | re | 8 | 9 | 17 | |
| 9 | 17 | 8 | 1 | 14 | li | 3 | - | 4 | c |
| 10 | 4 | - | 3 | 15 | re | 5 | 6 | 11 | |
| 11 | 11 | 5 | 8 | 14 | li | 10 | - | 18 | |
| 12 | 18 | - | 10 | 15 | re | 2 | 3 | 5 | |
| 13 | 5 | 2 | 5 | 14 | li | 7 | - | 12 | d |
| 14 | 12 | - | 7 | 15 | re | 9 | 10 | 19 | |
| 15 | 19 | 9 | 2 | 14 | li | 4 | - | 6 | |
| 16 | 6 | - | 4 | 15 | re | 6 | 7 | 13 | |
| 17 | 13 | 6 | 9 | 14 | li | 1 | - | 20 | e |
| 18 | 20 | - | 1 | 15 | re | 3 | 4 | 7 | |
| 19 | 7 | 3 | 6 | 14 | li | 8 | - | 14 | |
| 20 | 14 | - | 8 | 15 | re | 10 | 1 | 1 | |

# FIG. 5A

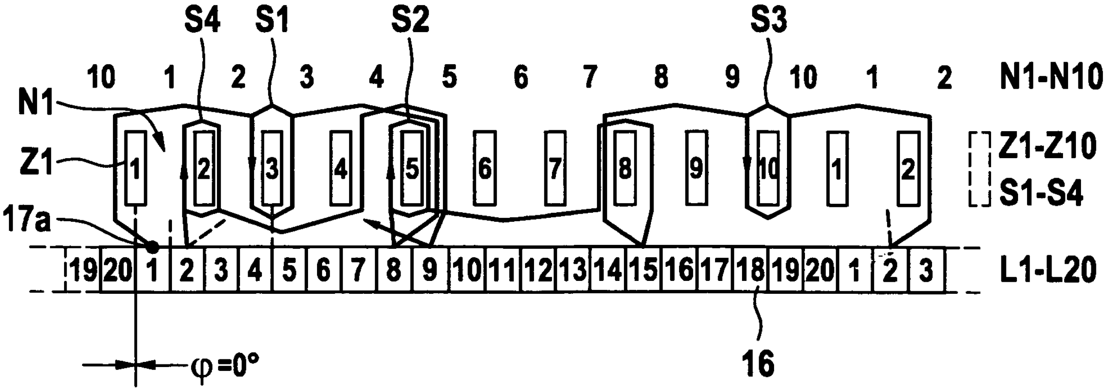

FIG. 5B

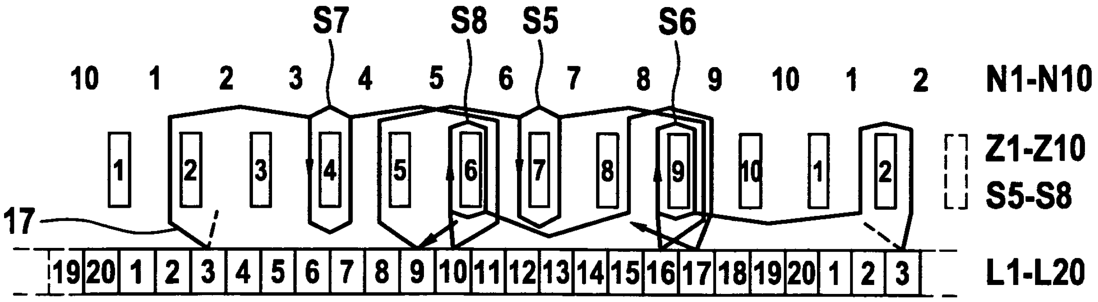


FIG. 5C

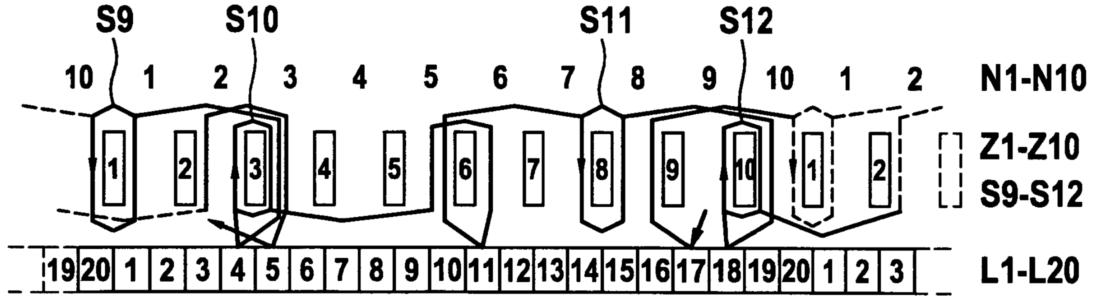


FIG. 5D

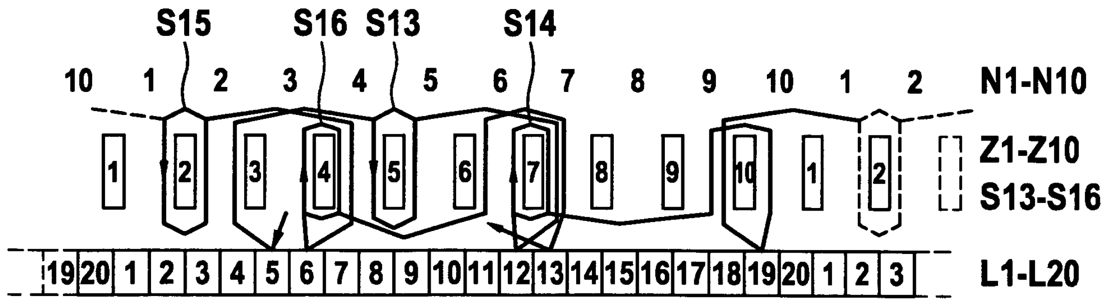


FIG. 5E

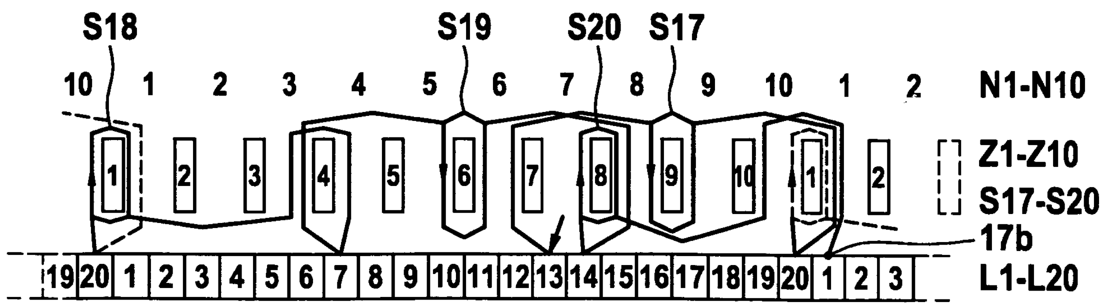

FIG. 6

| Spule | La | N | Polzahn | Wdg. | re/li | N | Polzahn | Wdg. | re/li | Le |
|---|---|---|---|---|---|---|---|---|---|---|
| 1 | 1 | 10 | 3 | 10 | li | 5 | - | - | - | 8 |
| 2 | 8 | - | 5 | 7 | re | - | 8 | 7 | re | 15 |
| 3 | 15 | 7 | 10 | 10 | li | 2 | - | - | - | 2 |
| 4 | 2 | - | 2 | 7 | re | - | 5 | 7 | re | 9 |
| 5 | 9 | 4 | 7 | 10 | li | 9 | - | - | - | 16 |
| 6 | 16 | - | 9 | 7 | re | - | 2 | 7 | re | 3 |
| 7 | 3 | 1 | 4 | 10 | li | 6 | - | - | - | 10 |
| 8 | 10 | - | 6 | 7 | re | - | 9 | 7 | re | 17 |
| 9 | 17 | 8 | 1 | 10 | li | 3 | - | - | - | 4 |
| 10 | 4 | - | 3 | 7 | re | - | 6 | 7 | re | 11 |
| 11 | 11 | 5 | 8 | 10 | li | 10 | - | - | - | 18 |
| 12 | 18 | - | 10 | 7 | re | - | 3 | 7 | re | 5 |
| 13 | 5 | 2 | 5 | 10 | li | 7 | - | - | - | 12 |
| 14 | 12 | - | 7 | 7 | re | - | 10 | 7 | re | 19 |
| 15 | 19 | 9 | 2 | 10 | li | 4 | - | - | - | 6 |
| 16 | 6 | - | 4 | 7 | re | - | 7 | 7 | re | 13 |
| 17 | 13 | 6 | 9 | 10 | li | 1 | - | - | - | 20 |
| 18 | 20 | - | 1 | 7 | re | - | 4 | 7 | re | 7 |
| 19 | 7 | 3 | 6 | 10 | li | 8 | - | - | - | 14 |
| 20 | 14 | - | 8 | 7 | re | - | 1 | 7 | re | 1 |

a

# FIG. 7

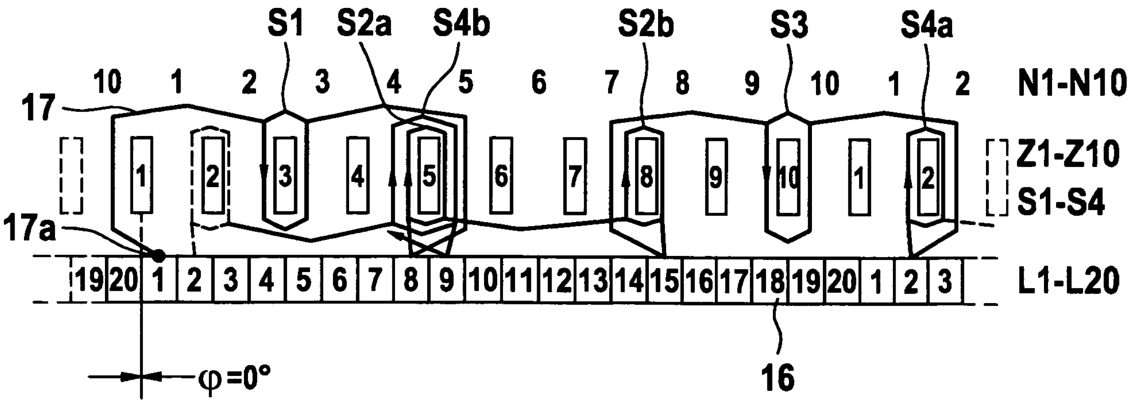


# FIG. 8

| Spule | La | N | Z | Wdg. | re/li | N | Z | Wdg. | re/li | Le |
|---|---|---|---|---|---|---|---|---|---|---|
| 1 | 1 | - | 3 | 10 | re | - | - | - | - | 8 |
| 2 | 8 | - | 5 | 7 | li | - | 8 | 7 | li | 15 |
| 3 | 15 | - | 10 | 10 | re | - | - | - | - | 2 |
| 4 | 2 | - | 5 | 7 | li | - | 5 | 7 | li | 9 |

a

# FIG. 9

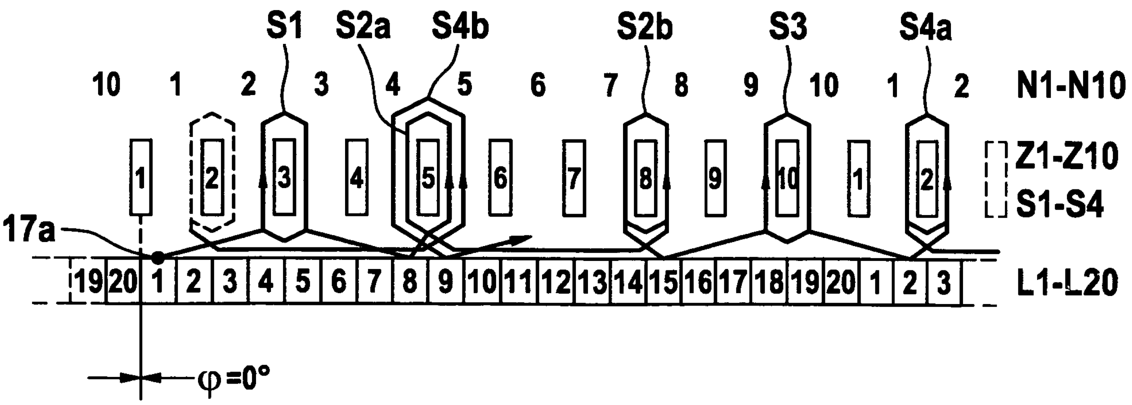

FIG. 10

| Spule | La | N | Polzahn | Wdg. | re/li | N | Polzahn | Wdg. | re/li | Le |
|---|---|---|---|---|---|---|---|---|---|---|
| 1 | 1 | 10 | 1 | 6 | re | 8 | 6 | 6 | li | 8 |
| 2 | 8 | - | 3 | 7 | li | 10 | 8 | 6 | re | 15 |
| 3 | 15 | 7 | 8 | 6 | re | 5 | 3 | 6 | li | 2 |
| 4 | 2 | - | 10 | 7 | li | 7 | 5 | 6 | re | 9 |
| 5 | 9 | 4 | 5 | 6 | re | 2 | 10 | 6 | li | 16 |
| 6 | 16 | - | 7 | 7 | li | 4 | 2 | 6 | re | 3 |
| 7 | 3 | 1 | 2 | 6 | re | 9 | 7 | 6 | li | 10 |
| 8 | 10 | - | 4 | 7 | li | 1 | 9 | 6 | re | 17 |
| 9 | 17 | 8 | 9 | 6 | re | 6 | 4 | 6 | li | 4 |
| 10 | 4 | - | 1 | 7 | li | 8 | 6 | 6 | re | 11 |
| 11 | 11 | 5 | 6 | 6 | re | 3 | 1 | 6 | li | 18 |
| 12 | 18 | - | 8 | 7 | li | 5 | 3 | 6 | re | 5 |
| 13 | 5 | 2 | 3 | 6 | re | 10 | 8 | 6 | li | 12 |
| 14 | 12 | - | 5 | 7 | li | 2 | 10 | 6 | re | 19 |
| 15 | 19 | 9 | 10 | 6 | re | 7 | 5 | 6 | li | 6 |
| 16 | 6 | - | 2 | 7 | li | 9 | 7 | 6 | re | 13 |
| 17 | 13 | 6 | 7 | 6 | re | 4 | 2 | 6 | li | 20 |
| 18 | 20 | - | 9 | 7 | li | 6 | 4 | 6 | re | 7 |
| 19 | 7 | 3 | 4 | 6 | re | 1 | 9 | 6 | li | 14 |
| 20 | 14 | - | 8 | 7 | li | 3 | 1 | 6 | re | 1 |

a

FIG. 11

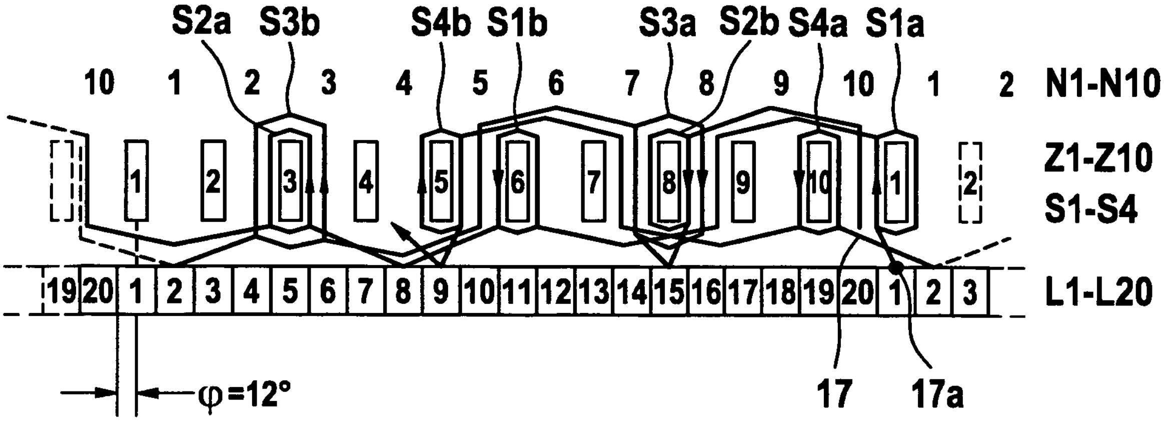
S2a
S3b
S4b
S1b
S3a
S2b
S4a
S1a
10 1 2 3 4 5 6 7 8 9 10 1 2
N1-N10
1 2 3 4 5 6 7 8 9 10 1 2
Z1-Z10
S1-S4
19 20 1 2 3 4 5 6 7 8 9 10 11 12 13 14 15 16 17 18 19 20 1 2 3
L1-L20
φ=12°
17
17a

# FIG. 12

| | Spule | La | N | Polzahn | Wdg. | re/li | N | Le | |
|---|---|---|---|---|---|---|---|---|---|
| | 1a | 1 | - | 8 | 14 | li | - | 8 | |
| | 2a | 8 | - | 10 | 13 | re | - | 15 | a |
| | 3a | 15 | - | 5 | 14 | li | - | 2 | |
| | 4a | 2 | - | 7 | 13 | re | - | 9 | |
| | 5a | 9 | - | 2 | 14 | li | - | 16 | |
| | 6a | 16 | - | 4 | 13 | re | - | 3 | |
| | 7a | 3 | - | 9 | 14 | li | - | 10 | |
| | 8a | 10 | - | 1 | 13 | re | - | 17 | |
| | 9a | 17 | - | 6 | 14 | li | - | 4 | |
| A | 10a | 4 | - | 8 | 13 | re | - | 11 | |
| | 11a | 11 | - | 3 | 14 | li | - | 18 | |
| | 12a | 18 | - | 5 | 13 | re | - | 5 | |
| | 13a | 5 | - | 10 | 14 | li | - | 12 | |
| | 14a | 12 | - | 2 | 13 | re | - | 19 | |
| | 15a | 19 | - | 7 | 14 | li | - | 6 | |
| | 16a | 6 | - | 9 | 13 | re | - | 13 | |
| | 17a | 13 | - | 4 | 14 | li | - | 20 | |
| | 18a | 20 | - | 6 | 13 | re | - | 7 | |
| | 19a | 7 | - | 1 | 14 | li | - | 14 | |
| | 20a | 14 | - | 3 | 13 | re | - | 1 | |
| | 1b | 1 | - | 3 | 14 | re | - | 8 | |
| | 2b | 8 | 5 | 5 | 12 | li | 7 | 15 | b |
| | 3b | 15 | - | 10 | 14 | re | - | 2 | |
| | 4b | 2 | 2 | 2 | 12 | li | 4 | 9 | |
| | 5b | 9 | - | 7 | 14 | re | - | 16 | |
| | 6b | 16 | 9 | 9 | 12 | li | 1 | 3 | |
| | 7b | 3 | - | 4 | 14 | re | - | 10 | |
| | 8b | 10 | 6 | 6 | 12 | li | 8 | 17 | |
| | 9b | 17 | - | 1 | 14 | re | - | 4 | |
| B | 10b | 4 | 3 | 3 | 12 | li | 5 | 11 | |
| | 11b | 11 | - | 8 | 14 | re | - | 18 | |
| | 12b | 18 | 10 | 10 | 12 | li | 2 | 5 | |
| | 13b | 5 | - | 5 | 14 | re | - | 12 | |
| | 14b | 12 | 7 | 7 | 12 | li | 9 | 19 | |
| | 15b | 19 | - | 2 | 14 | re | - | 6 | |
| | 16b | 6 | 4 | 4 | 12 | li | 6 | 13 | |
| | 17b | 13 | - | 9 | 14 | re | - | 20 | |
| | 18b | 20 | 1 | 1 | 12 | li | 3 | 7 | |
| | 19b | 7 | - | 6 | 14 | re | - | 14 | |
| | 20b | 14 | 8 | 8 | 12 | li | 10 | 1 | |

FIG. 13A

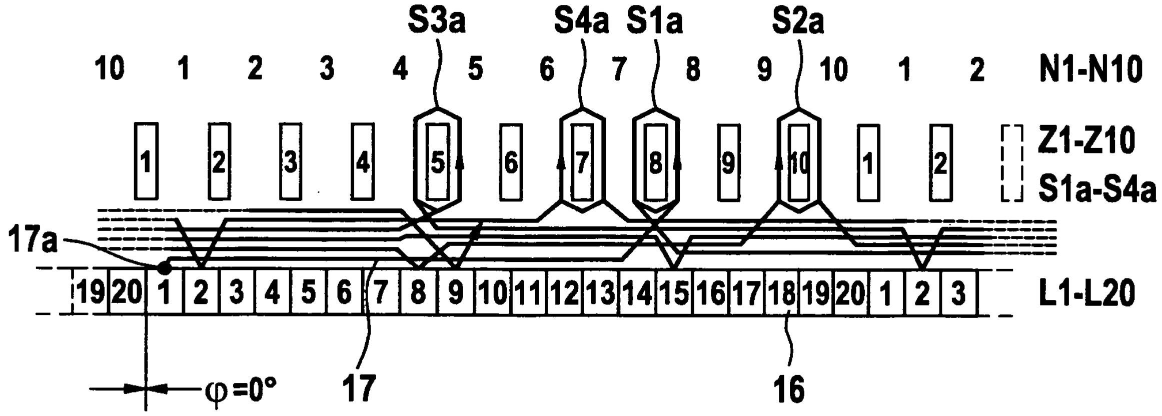


FIG. 13B

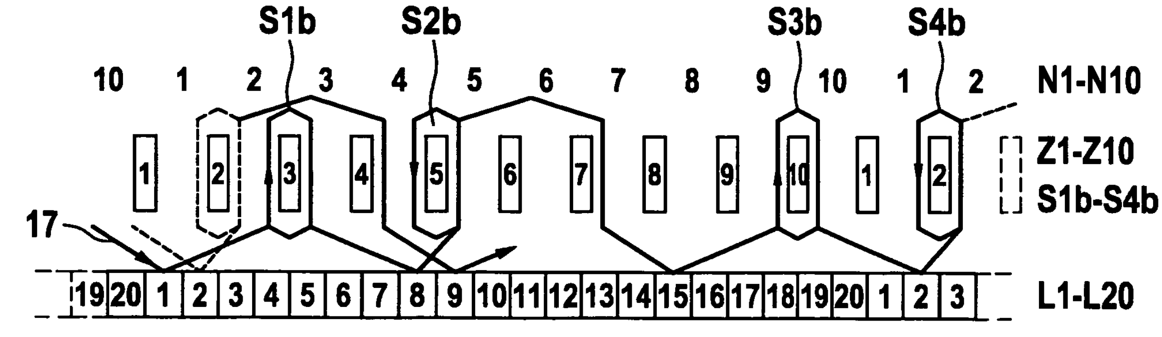

FIG. 14

| Spule | La | N | Z | Wdg. | re/li | N | Z | Wdg. | re/li | Le | |
|---|---|---|---|---|---|---|---|---|---|---|---|
| 1a | 1 | 10 | 8 | 12 | re | 5 | - | - | - | 8 | a |
| 2a | 8 | 3 | - | - | - | 2 | 10 | 12 | li | 15 | |
| 3a | 15 | 7 | 5 | 12 | re | 2 | - | - | - | 2 | |
| 4a | 2 | 10 | - | - | - | 9 | 7 | 12 | li | 9 | |
| 5a | 9 | 4 | 2 | 12 | re | 9 | - | - | - | 16 | |

FIG. 15

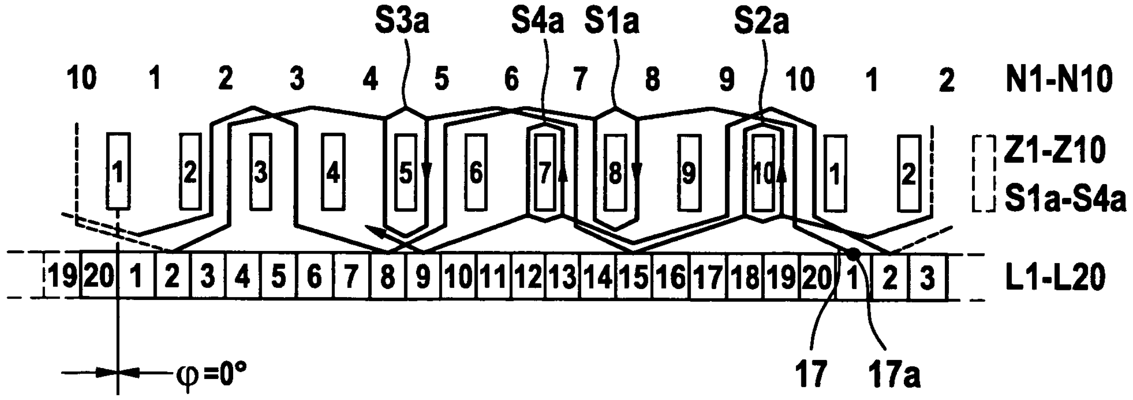

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004062813 A1
- JP 2007282500 B
- DE 102006036835